# EUROPÄISCHE PATENTSCHRIFT

(11) **EP 0 580 981 B1**
(45) Veröffentlichungstag und Bekanntmachung des Hinweises auf die Patenterteilung: **15.11.1995**
(21) Anmeldenummer: 93108395.0
(22) Anmeldetag: 25.05.1993
(51) Int. Cl.: C09J 7/02

(54) **Transfer-Selbstklebefolie**
Self-adhesive transfer sheet
Feuille auto-adhésive de transfert

(30) Priorität: 19.06.1992 DE 4220029
(43) Veröffentlichungstag der Anmeldung: 02.02.1994
(73) Patentinhaber: Beiersdorf Aktiengesellschaft, 20245 Hamburg (DE)
(72) Erfinder: Scheubner, Thomas, W-2000 Wedel (DE); Spies, Manfred, Dr., W-2000 Hamburg 20 (DE); Külper, Klaus, Dr., W-2103 Hamburg 95 (DE); Jauchen, Peter, W-2000 Hamburg 61 (DE)

(56) Entgegenhaltungen:
- EP-A- 0 149 135
- DE-A- 3 433 293

## Beschreibung

Die Erfindung betrifft ein Verfahren zum Übertragen Von Schriften oder dergleichen, unter Einsatz einer Transfer-Selbstklebefolie, eines sogenannten "application tape" wobei die Schriften oder dergleichen die von Hand oder maschinell, insbesondere mit computergesteuerten Schneidgeräten (Plottern) aus selbstklebend ausgerüsteten Folien geschnitten wurden.

Bisher werden derart ausgeschnittene Schriften und dergleichen in der Praxis mittels sogenannter application tapes mit einem Papierträger übertragen. Die dafür verwendeten Produkte weisen eine im Vollstrich aufgetragene Klebmasse auf, die nur schwach selbstklebend ist und demgemäß für eine reversible Verklebung geeignet ist. Der Benutzer sieht dabei jedoch nicht die zu übertragende Schrift und benötigt Hilfslinien oder sonstige Markierungen zur Orientierung. Dies ist für ein genaues Arbeiten ein gewichtiger Nachteil, der auch durch große praktische Erfahrung des Benutzers kaum ausgeglichen werden kann.

Es gibt aber auch bereits selbstklebend ausgerüstete Folien zu diesem Zweck. Auch diese sind mit einem schwach selbstklebenden Kleber im Vollstrich ausgerüstet und also für eine reversible Verklebung geeignet. Die Transparenz solcher Folien ist für den Benutzer von großem Vorteil, da er sieht, wohin er denn die zu übertragende Schrift oder dergleichen klebt. Weiter erleichternd für ihn sind dabei solche Folien, die als Orientierungshilfe ein aufgedrucktes Raster aufweisen. Dies ermöglicht dem Benutzer z.B. ein waagerechtes Ankleben oder ein an bereits vorhandenen Dingen ausgerichtetes Ankleben. Andererseits haben diese Folien auch Nachteile, die sich in der Praxis als hinderlich erweisen. So neigen solche Folien bei der Anwendung zu Lufteinschlüssen, die nicht faltenfrei ausgequetscht werden können. Das aufgedruckte Raster macht es zum einen notwendig, ein solches Folienmaterial zu verwenden, das sich gut bedrucken läßt, also insbesondere PVC, während aus Umwelt- und Kostengründen gern verwendetes PP oder PE weniger geeignet ist. Zum anderen macht ein aufgedrucktes Raster die sonst transparente Folie partiell undurchsichtig und es kann passieren, daß bei feinen Arbeiten gerade Hilfspunkte oder sonstige kleine Orientierungsmarken unter dem Raster eben gerade nicht für den Benutzer sichtbar sind. Schließlich erfordert ein solches Raster auch einen zusätzlichen Arbeitsgang bei der Herstellung solcher application tapes.

Verwendet werden solche application tapes mit Papier- oder Folienträger in der Praxis in verschiedenen Bereichen in Kombination mit anderen selbstklebenden Hochleistungsfolien. Entsprechende im Handel erhältliche Produkte, die üblicherweise mit Plottern verarbeitet werden, sind z.B. unter der Bezeichnung tesacal 4196 (Beiersdorf AG, Hamburg) als wetterbeständige, schrumpffreie, dampfstrahlfeste und kraftstoffbeständige Produkte bekannt.

Zum Stand der Technik gehören auch rückstandsfrei wieder ablösbare Flächengebilde, wie sie in EP 149.135 A3 beschrieben sind und deren Klebmasse in Form kalottenartiger Haftstellen mittels Druckverfahren (z.B. Siebdruck) aufgebracht sind. Derartige Produkte kommen insbes. als Haftnotizzettel zum Einsatz, geben jedoch keinen Hinweis auf eine neuartige und vorteilhafte Anwendung zum Übertragen von Schriften oder dergleichen.

Auch dauerhaft zu verklebende Kunststoffolien mit derartigen Klebmassen sind bekannt, so aus DE 34 33 293 A1, die insbesondere zum Oberflächenschutz eingesetzt werden. Auch diese Produkte geben keine Anregung hinsichtlich eines Verfahrens zum Übertragen von Schriften.

Aufgabe der Erfindung war es, hier Abhilfe zu schaffen, insbesondere ein Verfahren zu schaffen, das zwar einerseits ein transparentes application tape verwenden kann, andererseits die Nachteile des Standes der Technik nicht oder zumindest nicht in dem Maße aufweist.

Demgemäß betrifft die Erfindung Verfahren unter Einsatz eines application tape bzw. einer Transfer-Selbstklebefolie, wie sie im Patentanspruch 1 und in den Unteransprüchen näher gekennzeichnet ist.

Dabei sind die diskreten, kalottenartigen Klebestellen bevorzugt im Sieb- oder Tiefdruck aufgebracht, wie dies in der DE-OS 33 46 100 beschrieben ist. Auch die Klebmasse kann insb. wie dort angegeben verwendet werden.

Derartige Folien haben für die Praxis bedeutsame und überraschende Vorteile. So sind sie vollständig transparent und bieten dem Benutzer ungehinderten Durchblick. Sie neigen aber auch nicht zu Lufteinschlüssen. Vielmehr können Lufteinschlüsse, sollten sie sich gleichwohl einmal gebildet haben, leicht seitlich ausgequetscht werden. Das Andrücken der zu übertragenden Schrift oder dergleichen, mit dem Daumen oder Ballen führt dabei zugleich zu einem glatten und faltenfreien Sitz ohne Lufteinschlüsse. Auch das nachfolgende Abziehen des application tapes von der übertragenen Schrift erfolgt besonders schonend, aufgrund der besonders reversiblen Art der Verklebung über diskrete Klebstellen anstelle einer vollflächigen Verklebung. Dies spielt in der Praxis zudem dort eine Rolle, wo ausgeschnittene Schriften oder dergleichen auf dem application tape über längere Zeit verbleiben, ggf. sogar in diesem Zustand aufbewahrt und gehandelt werden. Denn dann zeigen Klebmassen gern das Phänomen des sogenannten Aufziehens, die Verklebung wird mit der Zeit fester und damit weniger reversibel, während die erfindungsgemäß verwendete Klebmasse in Form von vielen winzigen Klebstellen hier große Vorteile bietet.

Besondere Vorteile zeigen sich auch bei den mit Rastern oder dergleichen und mit farbiger Klebmasse ausgerüsteten Produkten. Muster und Raster lassen sich im Auftrag der Klebmasse selbst versehen, so daß zum einen das erfindungsgemäße Produkt einen Arbeitsgang weniger für seine Herstellung benötigt, als dies für bisher bekannte Produkte mit einem zusätzlichen Druckvorgang nötig ist. Aber auch volle Transparenz ist gewährleistet, das Raster hindert nicht die Durchsicht des Benutzers. Farbige Raster, die dennoch transparent sind, geben zugleich eine graphisch ansprechende und für den Benutzer hilfreiche Orientierungshilfe. Von besonderem Vorteil ist dabei auch, daß erfindungsgemäß auch Folien aus Polyolefinen, wie PP und PE, verwendet werden können, ohne mit der Schwierigkeit konfrontiert zu sein, daß sich solche Folien nicht oder nur schwierig bedrucken lassen. Ein Bedrucken ist eben nicht nötig.

Besonders geeignet als Folienträger sind Folien aus Polyolefin, insbesondere Polyethylen, das einseitig Corona vorbehandelt ist.

Die Klebmasse wird bevorzugt im Rotations-Siebdruck aufgetragen, wobei farbige und farblose Massen eingesetzt werden können. Zu Einzelheiten wird auf die DE-OS 33 46 100 verwiesen, insbesondere auch auf das dortige Beispiel. Bevorzugt werden dabei definierte Bereiche massefrei gehalten, wobei sich ein Druckbild ergibt, das dem Verarbeiter als Positionierungshilfe dient.

Im folgenden wird die Erfindung beispielhaft beschrieben, ohne sie damit unnötig einschränken zu wollen.

### Beispiel

In einem 10 Liter fassenden Plastikgefäß werden 5 kg Acronal V 205 (BASF) mit 1,217 Acronal 80 D (BASF) sorgfältig gemischt. Anschließend werden 0,081 kg Genamin 0-200 (Hoechst) in 0,050 kg Wasser gelöst und diese Lösung zu dem Acronalgemisch hinzugegeben. Der Dispersionskleber wird dann mit 0,106 kg fein in Wasser dispergiertem Rütapox 0164 (Bakelite) und mit 0,042 kg Folco Past 3004 (Follmann) als blauem Farbstoff versetzt. Um die Viskosität anzuheben, wird mit 1,428 kg Latekoll D (BASF) verdickt.

Auf ein sorgfältiges Homogenisieren ist bei allen Zugaben zu achten.

Die so erhaltene Klebemasse wird im Rotationssiebdruck kontinuierlich mit einer Schichtdicke von etwa 4-7 g/m² auf einer 115 mm dicken einseitig coronavorbehandelten LDPE-Folie (Oberflächenenergiee _> 50 mN/m) aufgetragen.

| Technische Bedingungen: | |
|---|---|
| Trägerbahngeschwindigkeit | 60 m/min |
| Siebgeometrie | 70 mesh / 13 % Durchlaß (mit quadratischer Strukturierung) |
| Bladeeinstellung | 21 Hz |
| Bladestärke | 150 mm |
| Andruck | 2-4 mm |

Die beschichtete Folie wird anschließend thermisch in 6 unterschiedlichen Trokkenkanälen getrocknet (Trockentemperaturen: 60, 80, 4 x 90°).

## Patentansprüche

1. Verfahren zum Übertragen von Schriften, Buchstaben, Ornamenten, Dekorstreifen, Schablonen oder dergleichen, die von Hand oder mittels Schneidgeräten (Plotter) aus selbstklebend ausgerüsteten Folien geschnitten wurden, wobei aus der selbstklebend ausgerüsteten Folie auf einem Trennpapier oder einer Trennfolie zunächst die Schrift oder dergleichen ausgeschnitten wird, das nicht gewünschte Material als Negativ abgezogen wird und die nun allein verbliebene Schrift oder dergleichen mit einer Selbstklebefolie überklebt wird, worauf die Selbstklebefolie mit der an ihr klebenden Schrift oder dergleichen von dem Trennpapier oder der Trennfolie abgezogen und auf das vorgesehene Substrat aufgeklebt wird, dadurch gekennzeichnet, daß als Selbstklebefolie eine Transfer-Selbstklebefolie (application tape) mit einem transparenten Folienträger verwendet wird, der einseitig mit einer Selbstklebemasse für reversibles Verkleben ausgerüstet ist, wobei die Selbstklebemasse in Form diskreter, kalottenartiger Klebstellen angeordnet ist und die Klebstellen ein Muster als Orentierungshilfe bilden, worauf ggf. vorhandene Lufteinschlüsse seitlich herausgedrückt werden und die Schrift oder dergleichen an das Substrat angedrückt wird, und abschließend die Selbstklebefolie rückstandsfrei von dem Substrat und der auf ihr klebenden Schrift abgezogen wird und ggf. erneut verwendet werden kann.

2. Verfahren nach Anspruch 1, dadurch gekennzeichnet, daß das Muster Linien, Raster, Buchstaben, Zeichen und dergleichen bildet.

3. Verfahren nach Anspruch 1, dadurch gekennzeichnet, daß die Selbstklebemasse eingefärbt ist.

4. Verfahren nach Anspruch 1, dadurch gekennzeichnet, daß die Selbstklebemasse transparent ist.

5. Verfahren nach Anspruch 1, dadurch gekennzeichnet, daß die Selbstklebemasse farbig und transparent ist und in einem quadratisch rasterartigen Muster angeordnet ist.

## Claims

1. Process for the transfer of lettering, characters, ornaments, decorative strips, templates or the like which have been cut out, by hand or by means of cutting devices (plotters), from films which have been provided with a self-adhesive coating, first the letter or the like being cut out of the film provided with a self-adhesive coating on a backing paper or a backing film, the undesired material being removed as a negative, and the character or the like, which is now all that remains, being covered by a self-adhesive film, the self-adhesive film with the letter or the like adhering to it then being separated from the backing paper or the backing film and bonded to the proposed substrate, characterised in that the sulf-adhesive film used is a self-adhesive transfer film (application tape) having a transparent film support which is coated on one side with a self-adhesive composition for reversible bonding, the self-adhesive composition being arranged in the form of discrete, dome-like adhesive points and the adhesive points forming a pattern as an alignment aid, any air bubbles present are then pressed out sidewards, and the character or the like is pressed onto the substrate and the self-adhesive film is then separated from the substrate and the letter adhering thereto, without leaving a residue, and can, if desired, be re-used.

2. Process according to Claim 1, characterised in that the pattern forms lines, grids, characters, symbols and the like.

3. Process according to Claim 1, characterised in that the self-adhesive composition is coloured.

4. Process according to Claim 1, characterised in that the self-adhesive film is transparent.

5. Process according to Claim 1, characterised in that the self-adhesive composition is coloured and transparent and is arranged in a square-gridlike pattern.

## Revendications

1. Procédé de transfert de caractères, de lettres, d'ornements, de bandes décoratives, de calibres ou d'éléments similaires, qui ont été découpés à la main ou à l'aide d'unités de coupe (tables traçantes) à partir de feuilles équipées de manière auto-adhésive, le caractère ou l'élément similaire étant tout d'abord découpé de la feuille équipée de manière auto-adhésive sur un papier de séparation ou sur une feuille de séparation, le matériau non souhaité étant retiré en tant que négatif et le caractère ou l'élément similaire restant seul étant recouvert par collage d'une feuille auto-adhésive, à la suite de quoi la feuille auto-adhésive est retirée du papier de séparation ou de la feuille de séparation avec le caractère ou l'élément similaire qui y adhère, et est collée sur le substrat prévu, caractérisé en ce que, en tant que feuille auto-adhésive, on utilise une feuille auto-adhésive de transfert (application tape) avec un support de feuille transparent, qui est pourvu d'un côté d'une masse auto-adhésive en vue d'un collage réversible, la masse auto-adhésive étant disposée sous la forme de points d'adhésion discrets, sous forme de calottes sphériques, et les points d'adhésion formant un motif servant d'aide d'orientation, à la suite de quoi les poches d'air éventuellement présentes sont expulsées latéralement et le caractère ou l'élément similaire est pressé sur le substrat, et la feuille auto-adhésive est finalement retirée, sans laisser de résidus, du substrat et du caractère qui y colle, et peut être, le cas échéant, ré-utilisée.

2. Procédé selon la revendication 1, caractérisé en ce que le motif constitue des lignes, des quadrillages, des lettres, des signes et des éléments similaires.

3. Procédé selon la revendication 1, caractérisé en ce que la masse auto-adhésive est imprégnée de colorants.

4. Procédé selon la revendication 1, caractérisé en ce que la masse auto-adhésive est transparente.

5. Procédé selon la revendication 1, caractérisé en ce que la masse auto-adhésive est colorée et transparente et est disposée dans un motif en forme de quadrillage carré.
